# FASCICULE DE BREVET EUROPEEN

(11) **EP 1 721 701 B1**
(45) Date de publication et mention de la délivrance du brevet: **28.05.2008**
(21) Numéro de dépôt: 06006217.1
(22) Date de dépôt: 25.03.2006
(51) Int. Cl.: B23Q 39/04, B23Q 1/54

(54) **Procédé et machine-outil d'usinage avec un plateau tournant portant plusieurs pièces et un autre portant plusieurs outils**
Bearbeitungsmaschine und -verfahren mit einem Drehtisch mit mehreren Werkstücken und einem anderen mit mehreren Werkzeugen
Machining process and machine with a rotating table carrying a plurality of workpieces and another one carrying a plurality of tools

(30) Priorité: 10.05.2005 CH 8192005
(43) Date de publication de la demande: 15.11.2006
(73) Titulaire: Kummer Frères SA, Fabrique de machines, CH-2720 Tramelan (CH)
(72) Inventeur: Roquier, François, 2720 Tramelan (CH); Froidevaux, André, 2345 Les Breuleux (CH)
(74) Mandataire: Reuteler, Raymond Werner

(56) Documents cités:
- EP-A- 0 573 678
- DE-A1- 19 746 494

## Description

La présente invention concerne un procédé d'usinage permettant d'effectuer plusieurs usinages sur plusieurs faces d'une pluralité de pièces mécaniques, en une seule opération. L'invention concerne également une machine outil apte à mettre en oeuvre ce procédé d'usinage.

Lors de l'usinage d'un nombre important de pièces, les temps de chargement et déchargement des pièces, ainsi que les réglages de machines entre différents usinages nécessitent généralement beaucoup de temps et sont donc onéreux relativement au coût de chaque pièce à usiner. Ceci est particulièrement vrai pour de très petites pièces, comme par exemple des appliques ou index destinés à être fixés sur des cadrans de montres, pièces qui sont généralement fabriquées en grandes quantités.

Un but de l'invention est donc de proposer un procédé d'usinage permettant d'usiner simultanément une pluralité de pièces, plusieurs usinages pouvant être effectués simultanément, alternativement ou successivement sur plusieurs faces desdites pièces, sans qu'il soit nécessaire de décharger les pièces de la machine-outil entre lesdits usinages et minimisant et simplifiant les réglages à effectuer entre les différents usinages. Un autre but de l'invention est de proposer une machine-outil apte à fonctionner selon ce dernier procédé.

Ces buts sont atteints tout d'abord par un procédé tel que décrit dans la revendication 1, des variantes et formes d'exécution particulières du procédé étant décrites dans les revendications dépendantes, puis par deux formes d'exécution d'une machine-outil aptes à mettre en oeuvre le procédé précédent, qui sont décrites dans les revendications 8 et 9.

Plusieurs formes d'exécution du procédé ainsi que d'une machine-outil selon l'invention sont décrites ci-après, cette description étant à considérer en regard du dessin annexé comportant les figures où :
la figure 1 montre une première forme d'exécution d'une portion de machine outil selon l'invention, dont les plateaux sont disposés selon une 1^{ère} position angulaire,
les figures 2A, 2B et 2C montrent la portion de machine outil de la figure 1, les plateaux étant en rotation, selon 3 instants déterminés,
les figures 3A et 3B montrent une portion d'une variante de la machine outil précédente,
les figures 4A, 4B, 4C, et 4D, montrent encore une portion d'une autre variante d'une machine outil selon l'invention,
les figures 5A et 5B montrent encore une portion d'une autre variante d'une machine outil selon l'invention,
les figures 6A, 6B, 6C et 6D montrent encore une portion d'une autre variante d'une machine outil selon l'invention,
les figures 7A et 7B montrent une portion d'une autre forme d'exécution d'une machine outil selon l'invention, et
les figures 8A et 8B sont deux portions des figures précédentes montrant deux variantes possibles de formes d'usinage.

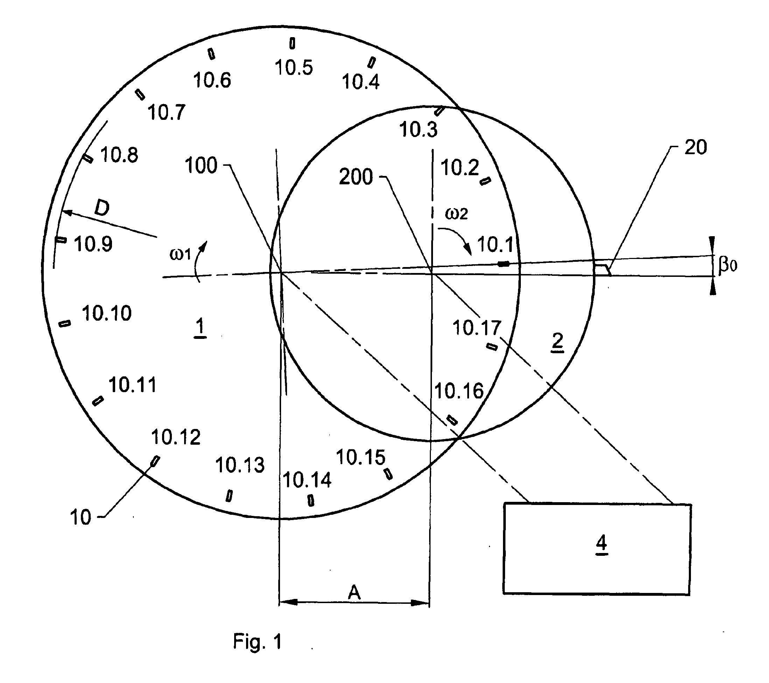

Les figures 1 à 6D montrent chacune une portion d'une première forme d'exécution d'une machine-outil selon l'invention, selon plusieurs variantes, cette première forme d'exécution de machine-outil comprenant un plateau porte-pièces 1 et un plateau porte-outils 2.

Sur la figure 1 on voit une première variante d'une première forme d'exécution d'une machine-outil selon l'invention comprenant un plateau porte-pièces 1 portant une pluralité N de pièces à usiner 10, régulièrement réparties sur une circonférence de diamètre D, proche de la périphérie du plateau 1. Dans l'exemple représenté, N = 17, les pièces 10 étant numérotées de 10.1 à 10.17. N peut être quelconque, pair ou impair. Ce nombre N sera le plus grand possible afin de diminuer les temps relatifs de charge et décharge du plateau 1 mais sera limité toutefois par les dimensions dudit plateau porte-pièces 1. Le plateau porte-pièces 1 peut être mis en rotation sur un premier plan de rotation, autour de son axe 100 à la vitesse ω₁, selon le sens indiqué par la flèche.

La machine-outil comprend aussi un plateau porte-outils 2, de forme circulaire dans l'exemple représenté, portant un premier outil d'usinage 20 sur sa périphérie. Le plateau porte-outils 2 peut être mis en rotation sur un deuxième plan de rotation autour de son axe 200 à la vitesse ω₂ selon le sens indiqué par la flèche, le deuxième plan de rotation étant superposé audit et espacé dudit premier plan de rotation. L'axe 200 du plateau porte-outils 2 est décalé d'un entraxe A relativement à l'axe 100 du plateau porte-pièces 1; par ailleurs l'outil 20 sur le plateau 2 et la première pièce 10.1 sur le plateau 1 sont déphasés d'un angle β₀ pour une raison que sera expliquée plus loin.

Sur cette figure ainsi que sur les suivantes, les plateaux sont représentés comme étant transparents afin de faciliter la compréhension du déroulement du procédé d'usinage.

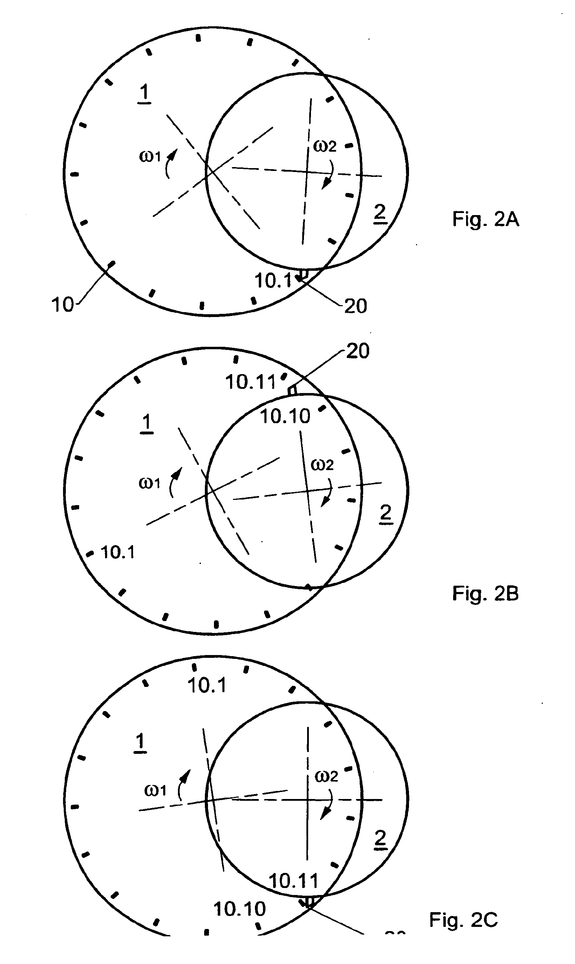

La figure 2A montre que les deux disques 1 et 2 ont été mis en rotation, respectivement aux vitesses ω₁ et ω₂. Sur cette figure, l'outil 20 est en cours d'usinage d'une première face de la pièce 10.1. Sur la figure 2B, les deux disques ont continué de tourner et l'outil 20 passe entre les pièces 10.10 et 10.11 pour s'éloigner du disque porte-pièces 1. Un moment plus tard, comme on le voit à la figure 2C, le plateau 2 ayant effectué un tour, l'outil 20 est en cours d'usinage de la pièce 10.11. On voit donc que lorsque le plateau porte-outils 2 effectue un tour à vitesse ω₂, le plateau porte-pièces 1 effectue une portion de tour à vitesse ω₁ de manière à présenter une autre pièce pour l'usinage. Dans l'exemple représenté, le plateau 1 a fait 10 / 17^{ème} de tour alors que le plateau 2 a fait 1 tour complet. Le rapport ω₂ / ω₁ sera donc ici de 17 / 10. De cette manière, les 17 pièces disposées sur le plateau 1 seront successivement usinées par l'outil 20 monté sur le plateau 2, le plateau 2 effectuant alors 17 tours durant que le plateau 1 en effectue 10. Comme indiqué précédemment, les mêmes opérations peuvent être effectuées pour un nombre de pièces N différent de 17.

De manière générale, afin que toutes les N pièces à usiner soit successivement usinées, le rapport des vitesse de rotation ω₂ / ω₁ sera le résultat de la division du nombre N par un autre nombre entier, les deux nombres étant premiers entre eux, c'est-à-dire n'ayant pas de diviseur commun. En choisissant N comme un nombre premier, on peut choisir n'importe quel autre nombre entier comme diviseur, sans risque de déroger à cette règle. On verra plus loin, que pour des raisons de forme d'usinage, il est préférable de choisir un rapport des vitesses de rotation ω₂ / ω₁ ayant une valeur fixe, déterminée pour chaque application.

En revenant à la figure 2B, on voit que l'outil 20 passe entre les deux pièces 10.10 et 10.11, sans en toucher aucune, pour s'éloigner du disque porte-pièces 1. Pour réaliser ceci, on choisit un déphasage initial β₀, tel que montré sur la figure 1 entre la 1^{ère} pièce 10.1 et la pointe de l'outil 20, qui soit supérieur à zéro et suffisamment petit pour ne pas toucher la pièce suivante. Cet angle de déphasage initial β₀ est choisi selon la forme des pièces à usiner, selon la dimension de l'outil 20 et selon l'écartement entre deux pièces successives à usiner sur le plateau porte-pièces 1.

L'usinage tel que décrit ci-dessus et par la suite peut être un usinage par fonçage ou par chariotage, soit un usinage nécessitant plusieurs passages d'outil sur la face de la pièce pour effectuer l'usinage complet de cette face. Entre deux passages successifs de l'outil on varie de la valeur d'une passe l'entraxe A entre les plateaux 1 et 2 et/ou on varie la distance entre les deux plateaux 1 et 2 selon un axe perpendiculaire à celui des figures, ces deux opérations, variation de distance entre plateaux et passage de l'outil sur l'ensemble des pièces étant répétées et conduites, par exemple à l'aide d'un logiciel CNC, jusqu'à la fin de l'usinage. Un usinage par fonçage ou chariotage nécessite donc de pouvoir déplacer les plateaux porte-pièces et porte-outils relativement entre eux selon deux axes perpendiculaires.

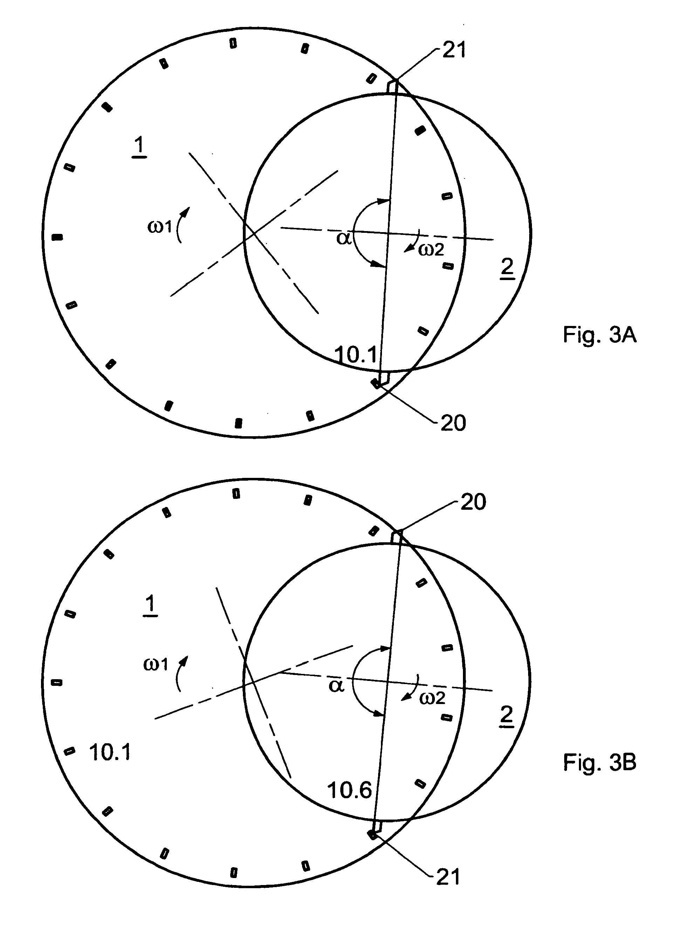

Les figures 3A et 3B montrent une deuxième variante de la machine outil, dans laquelle le plateau porte-outils 2 comporte deux outils 20 et 21, disposés selon un angle α sur la périphérie du plateau 2, permettant ainsi d'effectuer successivement deux usinages différents sur une même face des pièces à usiner. Cet angle α doit être un multiple d'un angle α₀ = 360° / (N * ω₁ / ω₂). Ce multiple détermine le rang de la pièce suivante qui sera usinée par le 2^{ème} outil. Dans l'exemple représenté, avec ω₁ / ω₂ = 10/17 et N = 17, on a α₀ = 36°. L'angle α choisi sur la figure 3A vaut 180°, soit 5 * 36°.On a choisi ici un angle de 180° afin d'équilibrer le plateau porte-pièces et d'éviter les vibrations. La figure 3A correspond à la figure 2A précédente où l'outil 20 est en cours d'usinage de la pièce 10.1. Lorsque le plateau porte-outils 2 a effectué une rotation correspondant à un angle α, ici ½ tour, soit lorsqu'il présente l'outil 21 en face d'une pièce à usiner, le plateau porte-pièces 1 a effectué lui une rotation d'un angle de ω₁ / ω₂ * α , ici 5 / 17^{ème} de tour, pour la même vitesse ω₁ que précédemment, et présente la pièce 10.6 pour usinage par l'outil 21. Lorsque le plateau 2 aura effectué un tour complet, l'outil 20 se trouvera en face de la pièce 10.11 pour son usinage, comme décrit en regard de la figure 2C. Comme précédemment, une face de chaque pièce est successivement usinée, la présence de deux outils différents permettant la réalisation de deux usinages différents sur une face, ceci sans augmenter la durée totale d'usinage de l'ensemble des pièces du plateau. Dû au fait que le décalage entre les outils 20 et 21 est un multiple de α₀, l'outil 21 peut aussi sortir et s'éloigner du plateau porte pièces 1 sans toucher deux pièces contiguës comme précédemment.

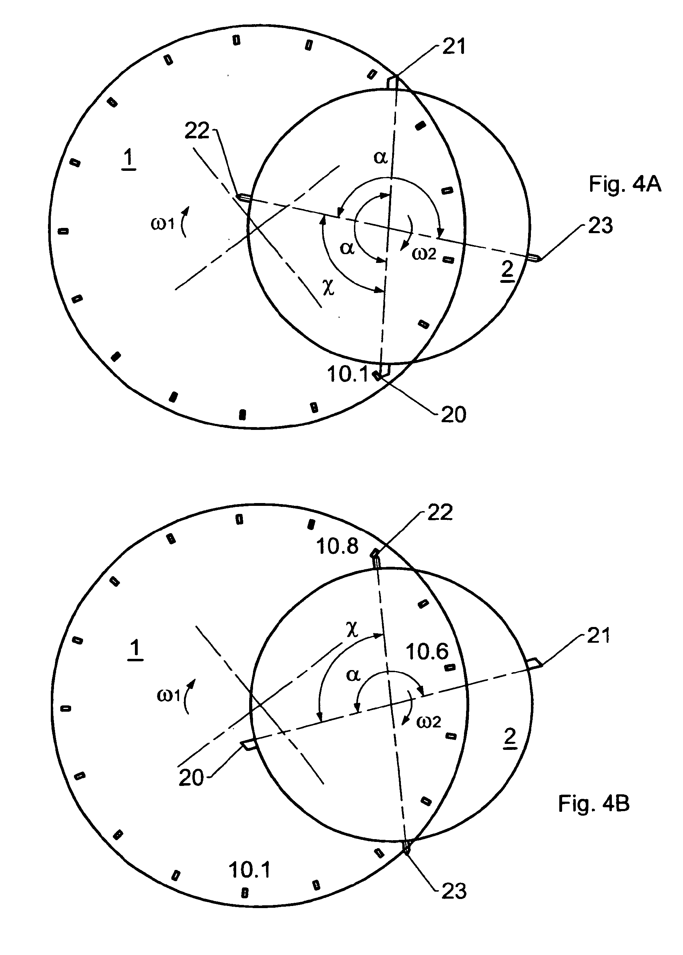

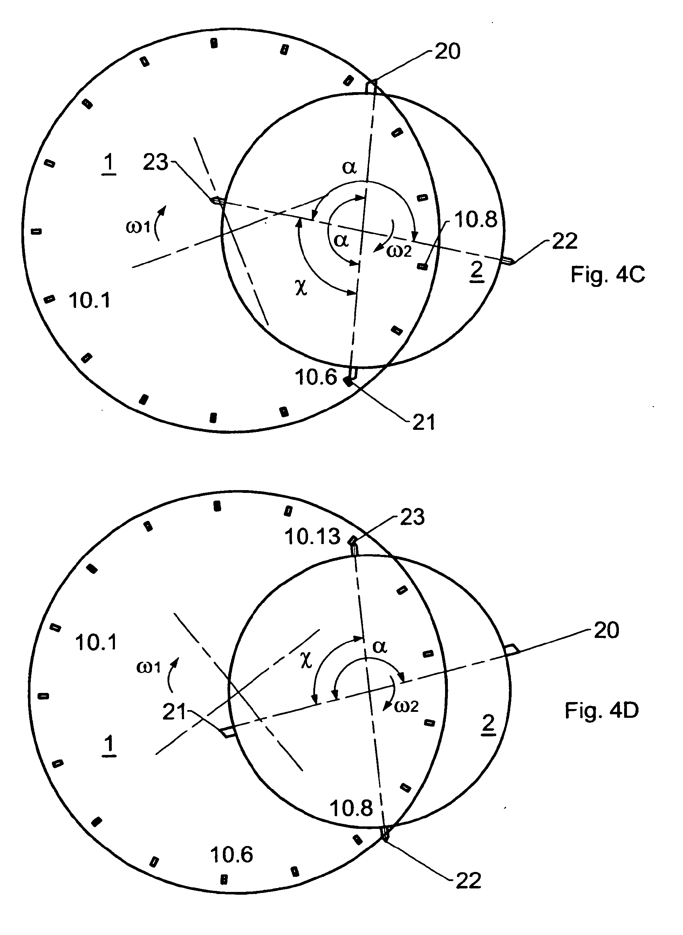

La configuration de la machine outil représentée aux figures 4A à 4D permet en plus d'usiner successivement de manière alternée les deux faces opposées des pièces disposées sur le plateau 1. Le plateau porte-outils 2 comporte ici deux paires d'outils, la première paire comprenant les outils 20 et 21 vus sur les figures 3A et 3B, disposés selon un angle α sur la périphérie du plateau 2, comme décrit précédemment pour la variante précédente, aptes à usiner, de la manière décrite plus haut, une première face des pièces à usiner, la deuxième paire comprenant les outils 22 et 23, aussi disposés avec le même angle α sur la périphérie du plateau 2, aptes à usiner, comme décrit ci-dessous, la deuxième face, opposée à la première face, des pièces à usiner. Les figures 4A et 4C correspondent aux figures 3A et 3B vues plus haut, le processus d'usinage par les outils 20 et 21 étant le même que celui décrit en regard de ces figures. On distingue simplement en plus sur les figures 4A et 4C les outils 22 et 23 aussi disposés sur la périphérie du plateau 2, selon un angle X par rapport aux outils 20 et 21. Cet angle X est la somme d'un angle de décalage initial X₀ et d'un multiple de l'angle α₀ décrit plus haut, X₀ étant une valeur déterminée de manière à ce que ces outils usinent les pièces sur leurs faces opposées de manière symétrique à leur axe longitudinal. X₀ est choisi en fonction de β₀ ainsi que de la largeur des pièces à usiner. Ainsi les premières faces des pièces sont successivement usinées par les outils 20 et 21 de la même manière que décrite plus haut, alors que les faces opposées sont successivement usinées par les outils 22 et 23. La figure 4B montre l'outil 22 usinant la face opposée de la pièce 10.8 alors que la figure 4D montre l'outil 23 effectuant un deuxième usinage sur la face opposée de la pièce 10.13. Le déroulement de la séquence complète d'usinage se lit de la manière suivante : usinage de la pièce 10.1 par l'outil 20, selon la figure 4A, usinage de la pièce 10.8 par l'outil 22 selon la figure 4B, usinage de la pièce 10.6 par l'outil 21 selon la figure 4C et usinage de la pièce 10.13 par l'outil 23 selon la figure 4D. La machine-outil telle que décrite permet donc un double usinage des premières faces des pièces à usiner, ainsi qu'un double usinage des faces opposées des mêmes pièces, ces usinages étant alternés permettent donc un usinage complet de l'ensemble des pièces sans augmenter la durée totale d'usinage.

Le nombre d'outils pouvant être disposés sur le plateau porte-outils 2 pour l'usinage des premières faces des pièces est limité à ω₁ / ω₂ * N. De même il est théoriquement possible d'en disposer le même nombre sur le même plateau porte-outils pour l'usinage des faces opposées des pièces, la seule limite étant les éventuelles interférences entre les différents outils eux-mêmes.

Du fait des possibles difficultés de réglage des différents outils entre eux, tant pour leur rayon, leur profondeur et leur position angulaire respective, il peut être intéressant de séparer les différents usinages, c'est-à-dire de les effectuer les uns après les autres, de manière à pouvoir modifier les positions relatives du plateau porte-pièces 1 et des axes de la machine, de même que le décalage angulaire β₀ entre les différents usinages.

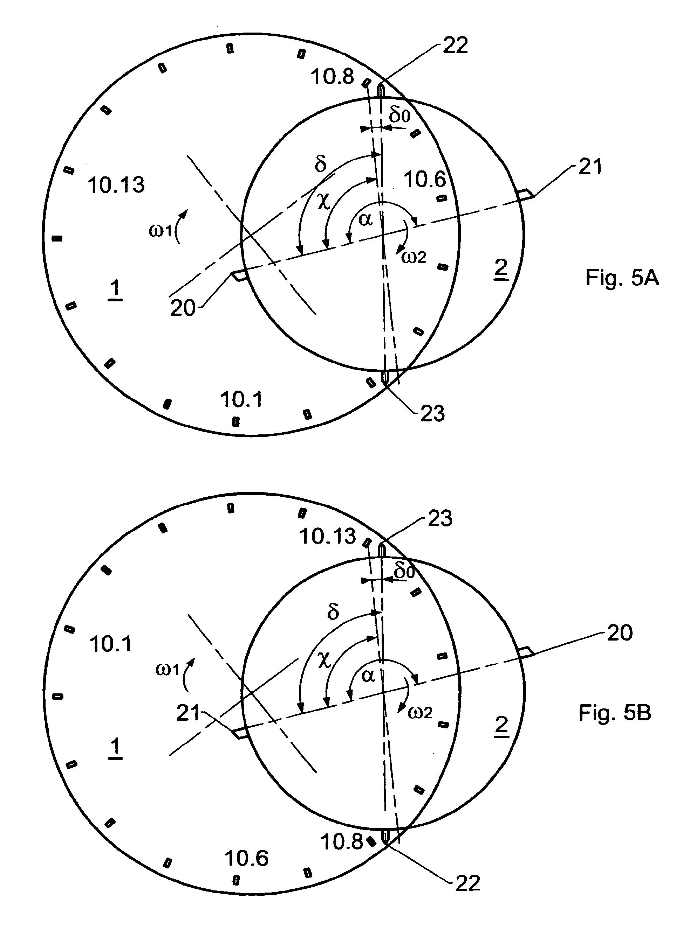

Une première manière de séparer les différents usinages, telle que représentée aux figures 5A et 5B, consiste à disposer les outils 22 et 23 selon des angles de décalage modifiés δ = δ₀ + X, de manière à ce qu'ils ne touchent pas la face opposée des pièces lors de l'usinage de la première face par les outils 20 et 21, et ensuite de modifier le décalage angulaire d'une valeur δ₀ de manière à ce que les outils 22 et 23 usinent la face opposée des pièces, alors que les outils 20 et 21 ne touchent pas la première face des pièces.

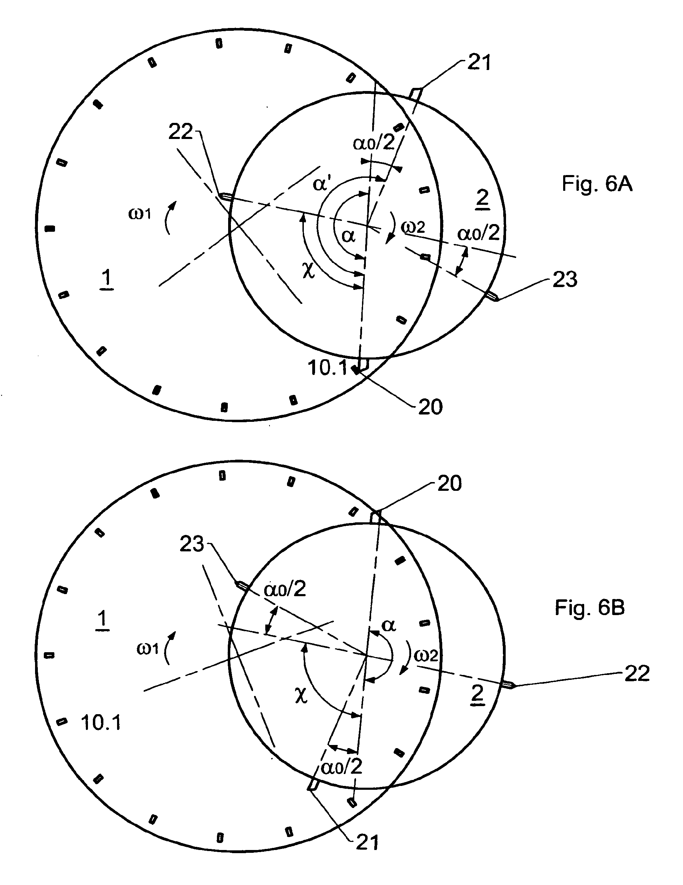

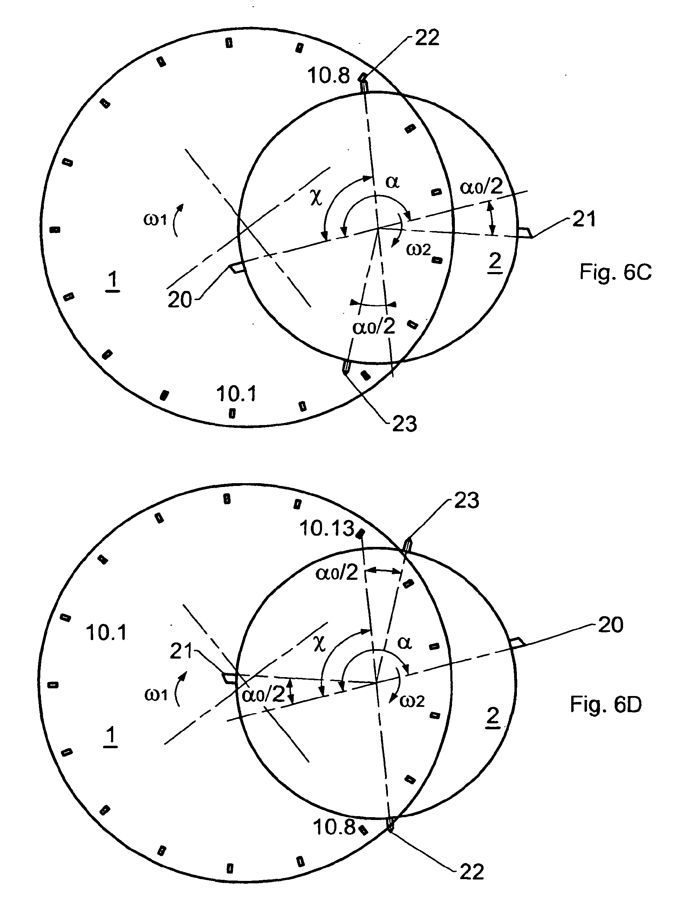

Une autre manière de séparer les différents usinages, telle que représentée aux figures 6A à 6D, consiste à disposer les outils 20 et 21 selon un angle α', supérieur à α, la différence entre ces deux angles étant inférieure à α₀. On aura donc par exemple : α' = α + α₀ / 2, et les outils 22, respectivement 23 placés selon des angle X comme défini plus haut par rapport aux outils 20, respectivement 21. Dans ce cas, lors d'un premier décalage angulaire β₀, les outils 20, respectivement 22, effectuent le même type d'usinage sur la première, respectivement la face opposée de chaque pièce. Ensuite, après un décalage angulaire d'une valeur α₀ / 2, les outils 21, respectivement 23 effectuent un autre type d'usinage sur la première, respectivement la face opposée de chaque pièce. Un usinage de ce type nécessite un déplacement relatif du plateau porte-pièces et des axes de la machine entre les deux types d'usinage permettant un réglage supplémentaire. Dans le cas de l'utilisation de deux fois trois outils différents pour l'usinage de la première face, respectivement de la face opposée de chaque pièce, l'angle α' serait par exemple égal à α + α₀ / 3, et les pièces usinées avec trois décalages angulaires différents. La même règle est applicable pour un nombre supérieur d'outils.

Il est également possible de combiner les deux types de séparation des différents usinages et d'effectuer autant de décalages angulaires qu'il y a d'outils sur le plateau porte-outils 2. Ceci permet une grande souplesse dans le réglage de la machine, mais chaque décalage angulaire a une incidence négative sur la durée totale d'usinage de l'ensemble des pièces disposées sur le plateau porte-pièces 1.

Il faut également rester attentif au fait que chaque décalage angulaire additionnel augmente le risque d'interférence entre l'un ou l'autre des outils et les pièces à usiner.

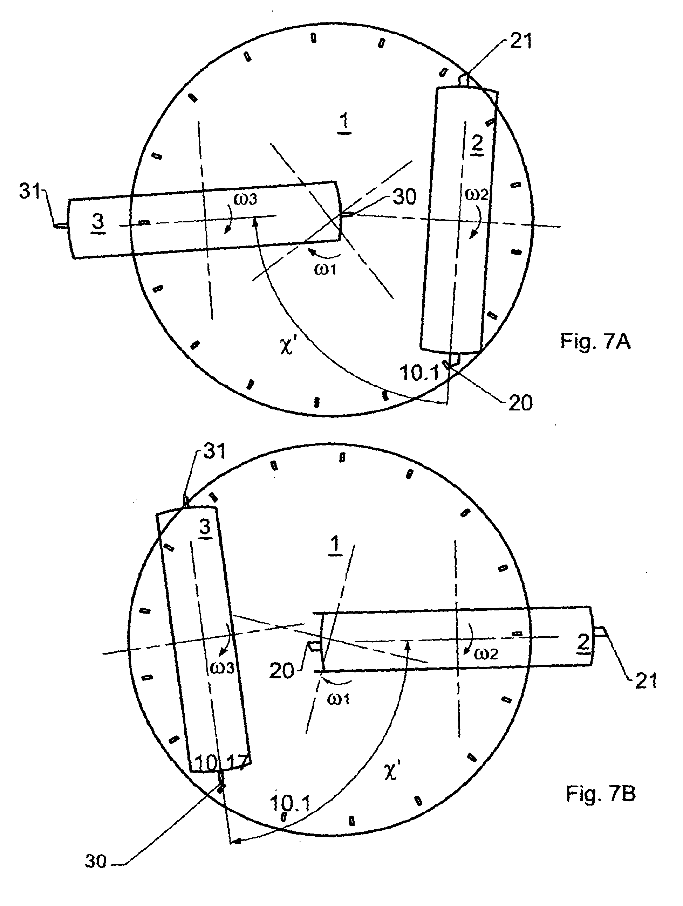

Les figures 7A et 7B montrent une deuxième forme d'exécution d'une machine-outil selon l'invention comportant un plateau porte-pièces et deux plateaux porte-outils.

Un double usinage des deux faces opposées des pièces est encore facilité par une machine-outil selon une deuxième forme d'exécution, telle que représentée aux figures 7A et 7B. Le plateau porte-pièces 1 est semblable à ceux des figures précédentes. Le plateau porte-outils 2 est ici de forme allongée et non plus en forme de disque. Il porte la paire d'outils 20 et 21 et travaille de manière absolument identique à ce qui a été décrit plus haut en relation avec les figures 3A et 3B. Un deuxième plateau porte-outils 3 est prévu,de forme semblable au plateau 2, disposé symétriquement au plateau 2 relativement au plateau porte-pièces 1 et portant une deuxième paire d'outils 30 et 31. Le plateau 3 tourne à vitesse ω₃ égale à la vitesse ω₂ du plateau 2, dans le même plan de rotation que ce dernier, les rapports de vitesse entre les plateaux 2 et 3 relativement au plateau 1 étant identiques à ce qui a été décrit plus haut. On voit donc sur la figures que, après que le plateau 2 ait effectué un premier usinage de la première face de la pièces 10.1 par l'outil 20, comme représenté sur la figure 7A, un premier usinage de la deuxième face de la pièce 10.17 est effectué par l'outil 30, comme représenté sur la figure 7B. On comprend qu'ensuite, après une rotation des plateaux 2 et 3 correspondant à un angle α, ici ½ tour, comme ce qui a été décrit plus haut en relation avec les figures 3A et 3B, ce seront les deuxièmes usinages sur les premières et deuxièmes faces des pièces qui seront effectués par les outils 21 et 31. La forme des plateaux 2 et 3 est déterminée afin que les deux plateaux puissent pivoter ensemble, leurs chemins se croisant, sans qu'ils entrent en collision. Le plateau porte-outils 3 est déphasé selon un angle X' par rapport au plateau porte-pièces 1. L'angle X' est la somme d'un angle X'₀ et d'un multiple de l'angle α₀, où X'₀ est une valeur calculée de manière à ce que les outils 30 et 31 usinent les pièces sur leur face opposée de manière symétrique à l'axe longitudinal d'une pièce à usiner et α₀ défini de la même manière que précédemment.

La machine-outil telle que décrite ici permet un double usinage simultané des premières et deuxièmes faces des pièces à usiner, d'une manière différente à celle décrite en regard de la machine-outil des figures 4A, 4B, 4C et 4D. Le réglage de la position relative de chaque outil dans le cas de cette dernière machine-outil est notamment dépendant de l'angle X, respectivement du déphasage X'. L'angle α₀ ne dépend que du nombre de pièces N et du rapport des vitesses de rotation ω1 / ω2 et peut facilement être normalisé de manière à couvrir un large spectre de formes différentes avec un nombre restreint de variantes. L'angle X, respectivement le déphasage X', sont par contre différents d'un type de pièces à l'autre. Il est dès lors beaucoup plus facile d'ajuster le déphasage X', dans le cas d'une machine-outil telle que représentée aux figures 7A et 7B, par exemple par l'introduction d'une valeur déterminée dans le programme d'une commande numérique, que de modifier l'angle entre deux outils sur un même plateau porte-outils pour chaque type de pièces.

Un autre avantage de la machine-outil telle que représentée aux figures 7A et 7B est que les deux faces opposées des pièces sont usinées selon le même sens.

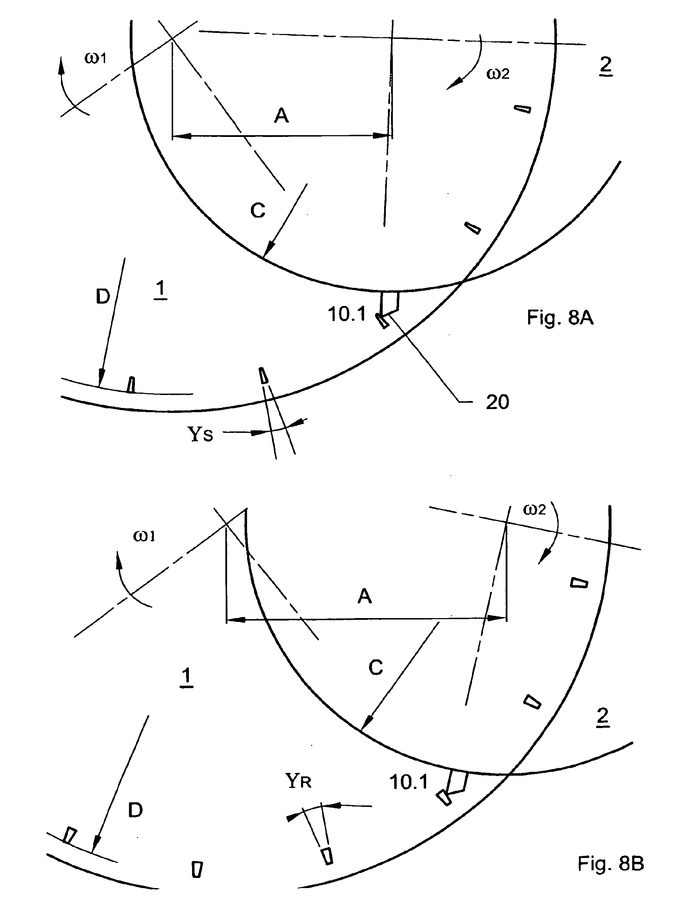

Sur les figures 8A et 8B on voit qu'il est possible de modifier la forme de la pièce à usiner, notamment en usinant un angle sortant γ_{S}, comme représenté sur la figure 8A ou un angle rentrant γ_{R}, comme représenté sur la figure 8B. Ces modifications sont obtenues par un choix adapté des valeurs de l'entraxe A ainsi que du déphasage β₀ (voir figure 1) entre les deux plateaux, de même que du rapport des vitesse de rotation ω₂ / ω₁ ainsi que des diamètres D et C relatifs des plateaux porte-pièces et porte-outils. Par un choix judicieux de ces valeurs, on peut aussi obtenir une pièce à faces parallèles ou quasi parallèles, les usinages mentionnés étant réalisés selon des pseudo-droites.

Pour obtenir un angle sortant Y_{S}, comme représenté sur la figure 8A, il faut diminuer la valeur d'entraxe A, augmenter le déphasage β₀, augmenter le rapport des vitesse de rotation ω₂ / ω₁, sans toutefois dépasser la valeur de 2, et diminuer le diamètre C du plateau porte-outils par rapport au diamètre D de la circonférence sur laquelle sont disposées les pièces à usiner. Pour obtenir un angle rentrant Y_{R}, comme représenté sur la figure 8B, il faut procéder de la manière inverse. Pour chaque type de pièces, il est recommandé de se fixer des diamètres des plateaux porte-pièces et porte-outils et un rapport des vitesses de rotation ω₂/ω₁, puis de calculer l'entraxe A et le déphasage β₀ nécessaire, à l'usinage de la pièce. Après coup, on contrôle optiquement, par exemple avec un logiciel de CAO approprié, si la valeur de déphasage β₀ obtenue est compatible avec les conditions décrites plus haut pour éviter les interférences entre les outils et les pièces à usiner. Si les conditions ne sont pas remplies, on fait varier le diamètre du plateau porte-outils et/ou le rapport des vitesses de rotation ω₂ / ω₁ dans le sens décrit ci-dessus, puis on recalcule l'entraxe A ainsi que le déphasage β₀, et on effectue une nouvelle vérification des interférences.

En raison des limites de dimensions des plateaux porte-pièces et porte-outils de manière à pouvoir les implémenter sur une machine-outil déterminée, certains usinages aux angles trop rentrants ou trop sortants ne seront pas réalisables.

Dans les exemples précédents, il a toujours été mentionné que les usinages étaient effectués sur les deux faces latérales opposées de chaque pièce, respectivement sur les deux faces disposées approximativement selon un rayon du plateau porte-pièces 1 et perpendiculaires à ce dernier. Rien ne s'oppose à ce que l'un ou l'autre ou même plusieurs des usinages décrits s'appliquent à la face supérieure de chaque pièce, soit celle reliant les deux faces latérales ci-dessus et opposée à la face directement en contact avec le plateau porte-pièces. Par usinage d'une face, dans cette description ainsi que dans les revendications, il est entendu qu'il peut s'agir d'un usinage multi étages de ladite face, soit d'un usinage de plusieurs surfaces sur des plans différents. Pour le cas où un ou des usinages sont à prévoir sur la face en contact avec le plateau porte-pièces ou sur les deux faces latérales perpendiculaires au rayon du plateau porte-pièces, ces usinages devront se faire par d'autres moyens que ceux décrits ici.

Afin de commander les différents mouvements et décalages angulaires mentionnés précédemment, la machine-outil comprendra avantageusement un moyen de commande, schématisé en 4 sur la figure 1, notamment apte à mettre en rotation les plateaux et synchroniser leurs vitesse de rotation relatives selon les valeurs prescrites, régler la distance A entre les axes de rotation des différents plateaux, régler l'espacement entre les plans de rotation des différents plateaux, régler et synchroniser les différents décalages angulaires instantanés mentionnés précédemment entre les différents plateaux. De manière avantageuse, les moyens de commande 4 comprennent une commande CNC.

Les exemples de forme d'exécutions décrits et représentés sur les figures comprennent un ou deux plateaux porte-outils ; il est tout à fait possible d'avoir une machine-outil selon l'invention comportant plus de deux plateaux porte-outils fonctionnant selon le procédé de l'invention. Des précautions particulières sont alors à prendre afin d'éviter les collisions d'outils.

## Revendications

1. Procédé d'usinage permettant d'usiner jusqu'à trois faces d'une pluralité (N) de pièces à usiner, **caractérisé en ce qu**'on :
- dispose ladite pluralité N de pièces à usiner (10), régulièrement espacées sur une circonférence de diamètre (D) d'un plateau porte-pièces (1),
- dispose une pluralité d'outils d'usinage (20,21,22,23,30,31) sur une périphérie d'au moins un plateau porte-outils (2, 3) de diamètre (C), un premier groupe d'outils (20, 21) étant destiné à usiner au moins une première face desdites pièces à usiner, un deuxième groupe d'outils (22,23, 30,31) étant destiné à usiner au moins une deuxième face desdites pièces à usiner, les outils étant disposés de telle manière que les outils de chaque groupe forment un angle (α, α') entre eux relativement à l'axe de rotation (200) du plateau porte-outils, chaque groupe d'outils étant décalé d'un autre angle (χ, δ) relativement à l'axe de rotation (200) du plateau porte-outils par rapport à l'autre groupe d'outils, un premier outil (20) étant décalé d'un angle (β₀) par rapport à la première pièce à usiner (10.01),
- met en rotation le plateau porte-pièces (1) autour de son axe de rotation (100) à une première vitesse angulaire ω₁,
- met en rotation le plateau porte-outils (2) autour de son axe de rotation (200) à une deuxième vitesse angulaire ω₂,
- le rapport entre la deuxième vitesse angulaire ω₂ et la première vitesse angulaire ω₁ étant établi comme étant le rapport entre le nombre de pièces à usiner N divisé par un nombre entier, le nombre de pièces à usiner N et ledit nombre entier étant premiers entre eux,
- l'angle (α) de décalage entre les outils d'un même groupe d'outils étant un multiple d'un angle α₀ = 360° / (N * ω₁ / ω₂).

2. Procédé d'usinage selon la revendication 1, **caractérisé en ce qu**'on obtient un usinage par chariotage ou fonçage en faisant varier la distance (A) entre les axes de rotation (100, 200, 300) des plateaux (1,2,3) et/ou l'espacement entre lesdits plateaux pour chaque passe d'usinage.

3. Procédé d'usinage selon l'une des revendications précédentes, **caractérisé en ce que** l'angle (χ) de décalage entre deux groupes d'outils vaut la somme d'un multiple de α₀ et d'un angle de décalage initial (χ₀) déterminé en fonction de l'angle de décalage (β₀) entre le premier outil et la première pièce à usiner, ainsi que de la largeur desdites pièces à usiner.

4. Procédé d'usinage selon l'une des revendications précédentes, **caractérisé en ce que** l'usinage de l'ensemble des pièces à usiner est effectué simultanément par les deux groupes d'outils.

5. Procédé d'usinage selon l'une des revendications 1 à 3, **caractérisé en ce que** l'angle (δ) de décalage modifié entre deux groupes d'outils vaut la somme de l'angle de décalage entre deux groupes d'outils (χ) et d'un décalage angulaire de plateaux (δ₀), un décalage angulaire (δ₀) équivalent du plateau porte-outils (2) étant commandé entre les actions du premier groupe d'outils et du deuxième groupe d'outils.

6. Procédé d'usinage selon l'une des revendications 1 à 3, **caractérisé en ce que** l'angle (α') de décalage entre les outils d'un même groupe d'outils est plus grand que l'angle α, la différence entre ces deux angles étant inférieure à α₀, un décalage angulaire équivalent du plateau porte-outils (2) étant commandé entre les actions du premier groupe d'outils et du deuxième groupe d'outils.

7. Procédé d'usinage selon l'une des revendications précédentes, **caractérisé en ce que** l'angle (Y_{S}, Y_{R}) entre deux faces usinées opposées desdites pièces à usiner est déterminé par le réglage d'au moins un des paramètres : entraxe A entre le plateau porte-pièces (1) et le ou les plateaux porte-outils (2,3), décalage (β₀) entre le premier outil et la première pièce à usiner, rapport des vitesses (ω₁ /ω_{2,}) entre lesdits plateaux, diamètre (C) du ou des plateaux porte-outils (2,3), diamètre (D) du plateau porte-pièces (1).

8. Machine-outil apte à mettre en oeuvre le procédé selon l'une des revendication précédentes, **caractérisée en ce qu**'elle comprend :
- un plateau porte-pièces (1) apte à recevoir une pluralité (N) de pièces à usiner (10) sur une circonférence (D), ledit plateau étant en outre apte à être mis en rotation sur un premier plan de rotation autour de son axe de rotation (100) à une première vitesse angulaire (ω₁),
- un plateau porte-outils (2) apte à recevoir deux groupes d'outils (20,21,22,23) sur sa périphérie, ledit plateau étant en outre apte à être mis en rotation sur un deuxième plan de rotation autour de son axe de rotation (200) à une deuxième vitesse angulaire (ω₂), ledit deuxième plan de rotation étant parallèle et espacé dudit premier plan de rotation, l'axe de rotation (200) dudit plateau porte-outil étant disposé à une distance (A) de l'axe de rotation du plateau porte-pièces (1), les outils formant le premier groupe d'outils ayant un angle (α, α') entre eux relativement à l'axe de rotation (200) du plateau porte-outils, chaque groupe d'outils étant décalé d'un autre angle (χ, δ) relativement à l'axe de rotation (200) du plateau porte-outils par rapport à l'autre groupe d'outils, un premier outil (20) étant décalé d'un angle (β₀) par rapport à la première pièce à usiner (10.01),
- un moyen de commande (4), notamment apte à :
- régler et synchroniser les vitesse de rotation (ω₁, ω₂) desdits plateaux
- régler la distance (A) entre les axes de rotation (100, 200) desdits plateaux,
- régler l'espacement entre lesdits plateaux,
- imposer un décalage angulaire (α₀, β₀, δ) entre lesdits plateaux.

9. Machine-outil apte à mettre en oeuvre le procédé selon l'une des revendication 1 à 7, **caractérisée en ce qu**'elle comprend :
- un plateau porte-pièces (1) apte à recevoir une pluralité (N) de pièces à usiner (10) sur une circonférence (D), ledit plateau étant en outre apte à être mis en rotation sur un premier plan de rotation autour de son axe de rotation (100) à une première vitesse angulaire (ω₁),
- un premier plateau porte-outils (2) apte à recevoir un premier groupes d'outils (20,21) sur sa périphérie, ledit plateau étant en outre apte à être mis en rotation sur un deuxième plan de rotation autour de son axe de rotation (200) à une deuxième vitesse angulaire (ω₂), ledit deuxième plan de rotation étant parallèle et espacé dudit premier plan de rotation, l'axe de rotation (200) dudit plateau porte-outil étant disposé à une distance (A) de l'axe de rotation du plateau porte-pièces (1), les outils dudit premier groupe d'outils formant un angle (α, α') entre eux relativement à l'axe de rotation (200) du plateau porte-outils, un premier outil (20) étant décalé d'un angle (β₀) par rapport à la première pièce à usiner (10.01),
un deuxième plateau porte-outils (3) apte à recevoir un deuxième groupes d'outils (30,31) sur sa périphérie, ledit plateau étant en outre apte à être mis en rotation sur ledit deuxième plan de rotation autour de son axe de rotation (300) à ladite deuxième vitesse angulaire (ω₂), l'axe de rotation (300) dudit deuxième plateau porte-outils étant disposé symétriquement à l'axe de rotation (200) du premier plateau porte-outils (2) relativement à l'axe du plateau porte-pièces (1), les outils dudit deuxième groupe d'outils formant un angle (α, α') entre eux relativement à l'axe de rotation (300) du plateau porte-outils, les outils du premier groupe d'outils (20,21) disposés sur le premier plateau porte-outils (2) étant décalés d'un autre angle (χ,δ) relativement aux outils du deuxième groupe d'outils (30,31) disposés sur le deuxième plateau porte-outils (3),
- un moyen de commande (4), notamment apte à :
- régler et synchroniser les vitesse de rotation (ω₁, ω₂) desdits plateaux
- régler la distance (A) entre les axes de rotation (100, 200, 300) desdits plateaux,
- régler l'espacement entre lesdits plateaux,
- imposer un décalage angulaire (α_{0,} β₀, δ, χ) entre lesdits plateaux.

## Claims

1. A machining method with which up to three faces of a plurality (N) of workpieces may be machined, **characterized in that**:
- said plurality N of workpieces (10) are available, regularly spaced out on a circumference of diameter (D) of a workpiece-holder table (1),
- a plurality of machining tools (20, 21, 22, 23, 30, 31) are available on a periphery of at least one tool-holder table (2, 3) of diameter (C), a first group of tools (20, 21) being intended for machining at least one first face of said workpieces, a second group of tools (22, 23, 30, 21) being intended to machine at least one second face of said workpieces, the tools being positioned in such a way that the tools of each group form an angle (α, α') between them relatively to the axis of rotation (200) of the tool-holder table, each group of tools being shifted by another angle (χ, δ) relatively to the axis of rotation (200) of the tool-holder table with respect to the other group of tools, a first tool (20) being shifted by an angle (β₀) with respect to the first workpiece (10.01),
- the workpiece-holder table (1) is set into rotation about its axis of rotation (100) at a first angular velocity ω₁,
- the tool-holder table (2) is set into rotation about its axis of rotation (200) at a second angular velocity ω_{2,}
- the ratio between the second angular velocity ω₂ and the first angular velocity ω₁ being established as being the ratio between the number N of workpieces , divided by an integer, the number N of workpieces and said integer being prime with each other,
- the shift angle (α) between the tools of a same group of tools being a multiple of an angle α₀ = 360°/(N*ω₁/ω₂).

2. The machining method according to claim 1, **characterized in that** machining by straight turning or sinking is obtained by varying the distance (A) between the axes of rotation (100, 200, 300) of the tables (1, 2, 3) and/or the spacing between said tables for each machining pass.

3. The machining method according to any of the preceding claims,
**characterized in that** the shift angle (χ) between two groups of tools is the sum of a multiple of α₀ and of an initial shift angle (χ₀) determined according to the shift angle (β₀) between the first tool and the first workpiece , as well as to the width of said workpieces .

4. The machining method according to any of the preceding claims,
**characterized in that** the machining of the set of workpieces is carried out by both of the groups of tools, simultaneously.

5. The machining method according to any of claims 1 to 3,
**characterized in that** the modified shift angle (δ) between two groups of tools is the sum of the shift angle between two groups of tools (χ) and of an angular shift of tables (δ₀), an equivalent angular shift (δ₀) of the tool-holder table (2) being controlled between the actions of the first group of tools and of the second group of tools.

6. The machining method according to any of claims 1 to 3,
**characterized in that** the shift angle (α') between the tools of a same group of tools is larger than the angle α, the difference between both of these angles being less than α₀, an equivalent angular shift of the tool-holder table (2) being controlled between the actions of the first group of tools and of the second group of tools.

7. The machining method according to any of the preceding claims,
**characterized in that** the angle (Y_{S}, Y_{R}) between two opposite machined faces of said workpieces is determined by adjusting at least one of the parameters : the centre distance A between the workpiece-holder table (1) and the tool-holder table(s) (2, 3), the shift (β₀) between the first tool and the first workpiece, the ratio of the velocities (ω₁/ω₂) between said tables, the diameter (C) of the tool-holder table(s) (2, 3), the diameter (D) of the workpiece-holder table (1).

8. A machine tool capable of applying the method according to any of the preceding claims, **characterized in that** it comprises:
- a workpiece-holder table (1) capable of receiving a plurality (N) of workpieces (10) on a circumference (D), said table being further capable of being set into rotation on a first plane of rotation around its axis of rotation (100.) at a first angular velocity (ω₁),
- a tool-holder table (2) capable of receiving two groups of tools (20, 21, 22, 23) on its periphery, said table being further capable of being set into rotation on a second plane of rotation around its axis of rotation (200) at a second angular velocity (ω₂), said second plane of rotation being parallel and spaced apart from said first plane of rotation, the axis of rotation (200) of said tool-holder table being positioned at a distance (A) from the axis of rotation of the workpiece-holder table (1), the tools forming the first group of tools having an angle (α, α') between them relatively to the axis of rotation (200) of the tool-holder table, each group of tools being shifted by another angle (χ, δ) relatively to the axis of rotation (200) of the tool-holder table with respect to the other group of tools, a first tool (20) being shifted by an angle (β₀) with respect to the first workpiece (10.01),
- a control means (4), notably capable of:
- adjusting and synchronizing the rotational velocities (ω_{1,} ω₂) of said tables,
- adjusting the distance (A) between the axes of rotation (100, 200) of said tables,
- adjusting the spacing between said tables,
- imposing an angular shift (α₀, β₀, δ) between said tables.

9. A machining tool capable of applying the method according to any of claims 1 to 7, **characterized in that** it comprises:
- a workpiece-holder table (1) capable of receiving a plurality (N) of workpieces (10) on a circumference (D), said table being further capable of being set into rotation on a first plane of rotation around its axis of rotation (100) at a first angular velocity (ω₁),
- a first tool-holder table (2) capable of receiving a first group of tools (20, 21) on its periphery, said table being further capable of being set into rotation on a second plane of rotation around its axis of rotation (200) at a second angular velocity (ω₂), said second plane of rotation being parallel and spaced apart from said first plane of rotation, the axis of rotation (200) of said tool-holder table being positioned at a distance (A) from the axis of rotation of the workpiece-holder table (1), the tools of said first group of tools forming an angle (α, α') between each other relatively to the axis of rotation (200) of the tool-holder table, a first tool (20) being shifted by an angle (β₀) with respect to the first workpiece (10.01),
- a second tool-holder table (3) capable of receiving a second group of tools (30, 31) on its periphery, said table being further capable of being set into rotation on said second plane of rotation around its axis of rotation (300) at said second angular velocity (ω₂), the axis of rotation (300) of said second tool-holder table being positioned symmetrically to the axis of rotation (200) of the first tool-holder table (2) relatively to the axis of workpiece-holder table (1), the tools of said group of tools forming an angle (α, α') between them relatively to the axis of rotation (300) of the tool-holder table, the tools of the first group of tools (20, 21) positioned on the first tool-holder table (2) being shifted by another angle (χ, δ) relatively to the tools of the second group of tools (30, 31) positioned on the second tool-holder table (3),
- a control means (4), notably capable of:
- adjusting and synchronizing the rotational velocities (ω₁, ω₂) of said tables,
- adjusting the distance (A) between the axes of rotation (100, 200, 300) of said tables,
- adjusting the spacing between said tables,
- imposing an angular shift (α₀, β₀, δ, χ) between .said tables.

## Patentansprüche

1. Bearbeitungsverfahren, das es gestattet, bis zu drei Seiten einer Vielzahl (N) von zu bearbeitenden Werkstücken zu bearbeiten, **dadurch gekennzeichnet, dass**:
- die besagte Vielzahl N von zu bearbeitenden Werkstücken (10) regelmäßig auf einem Umfang mit dem Durchmesser (D) eines Werkstücktischs (1) angeordnet ist,
- eine Vielzahl von Bearbeitungswerkzeugen (20, 21, 22, 23, 30, 31) auf einer Peripherie mindestens eines Werkzeugtischs (2, 3) eines Durchmessers (C) angeordnet ist, wobei eine erste Werkzeuggruppe (20, 21) dazu bestimmt ist, mindestens eine erste Seite der zu bearbeitenden Werkstücke zu bearbeiten, eine zweite Werkzeuggruppe (22, 23, 30, 31) dazu bestimmt ist, mindestens eine zweite Seite der zu bearbeitenden Werkstücke zu bearbeiten, wobei die Werkzeuge derart angeordnet sind, dass die Werkzeuge jeder Gruppe einen Winkel (α, α') zwischen sich relativ zur Rotationsachse (200) des Werkzeugtischs ausbilden, wobei jede Werkzeuggruppe in einem anderen Winkel (χ, δ) relativ zur Rotationsachse (200) des Werkzeugtischs im Verhältnis zur anderen Werkzeuggruppe verschoben ist, wobei ein erstes Werkzeug (20) in einem Winkel (β₀) im Verhältnis zum ersten zu bearbeitenden Werkstück (10.01) verschoben ist,
- der Werkstücktisch (1) um seine Rotationsachse (100) mit einer ersten Winkelgeschwindigkeit ω₁ in Rotation versetzt wird,
- der Werkzeugtisch (2) um seine Rotationsachse (200) mit einer zweiten Winkelgeschwindigkeit ω₂ in Rotation versetzt wird,
- wobei das Verhältnis zwischen der zweiten Winkelgeschwindigkeit ω₂ und der ersten Winkelgeschwindigkeit ω₁ festgelegt ist als Verhältnis zwischen der Anzahl der zu bearbeitenden Werkstücke N geteilt durch eine ganze Zahl, wobei die Anzahl der zu bearbeitenden Werkstücke N und die ganze Zahl untereinander Primzahlen sind,
- wobei der Winkel (α) der Verschiebung zwischen den Werkzeugen derselben Werkzeuggruppe ein Vielfaches eines Winkels α₀ = 360° / (N * ω₁/ω₂) ist.

2. Bearbeitungsverfahren nach Anspruch 1, **dadurch gekennzeichnet, dass** man eine Bearbeitung durch Langdrehen oder Einsenken erhält, indem man den Abstand (A) zwischen den Rotationsachsen (100, 200, 300) der Tische (1, 2, 3) und/oder den Abstand zwischen diesen Tischen für jeden Bearbeitungsgang ändert.

3. Bearbeitungsverfahren nach einem der vorangehenden Ansprüche, **dadurch gekennzeichnet, dass** der Winkel (χ) der Verschiebung zwischen zwei Werkzeuggruppen der Summe eines Vielfachen von α₀ und eines Anfangs-Verschiebewinkels (χ₀) entspricht, der in Abhängigkeit des Verschiebewinkels (β₀) zwischen dem ersten Werkzeug und dem ersten zu bearbeitenden Werkstück bestimmt wird, sowie der Breite der zu bearbeitenden Werkstücke.

4. Bearbeitungsverfahren nach einem der vorangehenden Ansprüche, **dadurch gekennzeichnet, dass** die Bearbeitung aller zu bearbeitenden Werkstücke gleichzeitig durch die zwei Werkzeuggruppen erfolgt.

5. Bearbeitungsverfahren nach einem der Ansprüche 1 bis 3, **dadurch gekennzeichnet, dass** der modifizierte Verschiebewinkel (δ) zwischen zwei Werkzeuggruppen der Summe des Verschiebewinkels zwischen zwei Werkzeuggruppen (χ) und einer Winkelverschiebung (δ₀) der Tische entspricht, wobei eine äquivalente Winkelverschiebung (δ₀) des Werkzeugtischs (2) zwischen den Aktionen der ersten Werkzeuggruppe und der zweiten Werkzeuggruppe gesteuert wird.

6. Bearbeitungsverfahren nach einem der Ansprüche 1 bis 3, **dadurch gekennzeichnet, dass** der Verschiebewinkel (α') zwischen den Werkzeugen einer Werkzeuggruppe größer ist als der Winkel α, wobei die Differenz zwischen diesen zwei Winkeln kleiner ist als α₀, wobei eine äquivalente Winkelverschiebung des Werkzeugtischs (2) zwischen den Aktionen der ersten Werkzeuggruppe und der zweiten Werkzeuggruppe gesteuert wird.

7. Bearbeitungsverfahren nach einem der vorangehenden Ansprüche, **dadurch gekennzeichnet, dass** der Winkel (γ_{S}, γ_{R}) zwischen zwei gegenüberliegenden bearbeiteten Seiten der zu bearbeitenden Werkstücke durch die Einstellung mindestens einer der Parameter: Achsabstand A zwischen dem Werkstücktisch (1) und dem oder den Werkzeugtischen (2, 3), Verschiebung (β₀) zwischen dem ersten Werkzeug und dem ersten zu bearbeitenden Werkstück, Verhältnis der Geschwindigkeiten (ω₁/ω₂) zwischen diesen Tischen, Durchmesser (C) des oder der Werkzeugtische (2, 3), Durchmesser (D) des Werkstücktischs (1) bestimmt wird.

8. Werkzeugmaschine, die imstande ist, das Verfahren nach einem der vorangehenden Ansprüche umzusetzen, **dadurch gekennzeichnet, dass** sie umfasst:
- einen Werkstücktisch (1), der imstande ist, eine Vielzahl (N) von zu bearbeitenden Werkstücken (10) auf einem Umfang (D) aufzunehmen, wobei der Tisch weiterhin imstande ist, auf einer ersten Rotationsebene um seine Rotationsachse (100) mit einer ersten Winkelgeschwindigkeit (ω₁) in Rotation versetzt zu werden,
- einen Werkzeugtisch (2), der imstande ist, auf seiner Peripherie zwei Werkzeuggruppen (20, 21, 22, 23) aufzunehmen, wobei der Tisch weiterhin imstande ist, auf einer zweiten Rotationsebene um seine Rotationsachse (200) mit einer zweiten Winkelgeschwindigkeit (ω₂) in Rotation versetzt zu werden, wobei die zweite Rotationsebene parallel und von der ersten Rotationsebene beabstandet ist, wobei die Rotationsachse (200) des Werkzeugtischs in einem Abstand (A) von der Rotationsachse des Werkstücktischs (1) angeordnet ist, wobei die Werkzeuge, die die erste Werkzeuggruppe bilden, einen Winkel (α, α') zwischen sich relativ zur Rotationsachse (200) des Werkzeugtischs haben, wobei jede Werkzeuggruppe in einem anderen Winkel (χ, δ) relativ zur Rotationsachse (200) des Werkzeugtischs im Verhältnis zur anderen Werkzeuggruppe verschoben ist, wobei ein erstes Werkzeug (20) in einem Winkel (β₀) im Verhältnis zum ersten zu bearbeitenden Werkstück (10.01) verschoben ist,
- ein Steuermittel (4), das vor allem imstande ist:
- die Rotationsgeschwindigkeiten (ω₁, ω₂) der Tische einzustellen und zu synchronisieren,
- den Abstand (A) zwischen den Rotationsachsen (100, 200) der Tische einzustellen,
- den Beabstandung zwischen den Tischen einzustellen,
- eine Winkelverschiebung (α₀, β₀, δ) zwischen den Tischen zu veranlassen.

9. Werkzeugmaschine, die imstande ist, das Verfahren nach einem der Ansprüche 1 bis 7 umzusetzen, **dadurch gekennzeichnet, dass** sie umfasst:
- einen Werkstücktisch (1), der imstande ist, eine Vielzahl (N) von zu bearbeitenden Werkstücken (10) auf einem Umfang (D) aufzunehmen, wobei der Tisch weiterhin imstande ist, auf einer ersten Rotationsebene um seine Rotationsachse (100) mit einer ersten Winkelgeschwindigkeit (ω₁) in Rotation versetzt zu werden,
- einen ersten Werkzeugtisch (2), der imstande ist, auf seiner Peripherie eine erste Werkzeuggruppe (20, 21) aufzunehmen, wobei der Tisch weiterhin imstande ist, auf einer zweiten Rotationsebene um seine Rotationsachse (200) mit einer zweiten Winkelgeschwindigkeit (ω₂) in Rotation versetzt zu werden, wobei die zweite Rotationsebene parallel und von der ersten Rotationsebene beabstandet ist, wobei die Rotationsachse (200) des Werkzeugtischs in einem Abstand (A) von der Rotationsachse des Werkstücktischs (1) angeordnet ist, wobei die Werkzeuge der ersten Werkzeuggruppe einen Winkel (α, α') zwischen sich relativ zur Rotationsachse (200) des Werkzeugtischs bilden, wobei ein erstes Werkzeug (20) in einem Winkel (β₀) im Verhältnis zum ersten zu bearbeitenden Werkstück (10.01) verschoben ist,
- einen zweiten Werkzeugtisch (3), der imstande ist, auf seiner Peripherie eine zweite Werkzeuggruppe (30, 31) aufzunehmen, wobei der Tisch weiterhin imstande ist, auf der zweiten Rotationsebene um seine Rotationsachse (300) mit der zweiten Winkelgeschwindigkeit (ω₂) in Rotation versetzt zu werden, wobei die Rotationsachse (300) des zweiten Werkzeugtischs symmetrisch zur Rotationsachse (200) des ersten Werkzeugtischs (2) relativ zur Achse des Werkstücktischs (1) angeordnet ist, wobei die Werkzeuge der zweiten Werkzeuggruppe einen Winkel (α, α') zwischen sich relativ zur Rotationsachse (300) des Werkzeugtischs bilden, wobei die Werkzeuge der ersten Werkzeuggruppe (20, 21), die auf dem ersten Werkzeugtisch (2) angeordnet sind, in einem anderen Winkel (χ, δ) relativ zu den Werkzeugen der zweiten Werkzeuggruppe (30, 31), die auf dem zweiten Werkzeugtisch (3) angeordnet sind, verschoben sind,
- ein Steuermittel (4), das vor allem imstande ist:
- die Rotationsgeschwindigkeiten (ω₁, ω₂) der Tische einzustellen und zu synchronisieren,
- den Abstand (A) zwischen den Rotationsachsen (100, 200, 300) der Tische einzustellen,
- den Beabstandung zwischen den Tischen einzustellen,
- eine Winkelverschiebung (α₀, β₀, δ, χ) zwischen den Tischen zu veranlassen.
